# EUROPÄISCHE PATENTSCHRIFT

(11) **EP 1 728 700 B1**
(45) Veröffentlichungstag und Bekanntmachung des Hinweises auf die Patenterteilung: **17.01.2007**
(21) Anmeldenummer: 05291006.4
(22) Anmeldetag: 09.05.2005
(51) Int. Cl.: B61L 1/16, H04Q 11/04

(54) **Verfahren und Vorrichtung zur Uberwachung einer Informationsübertragung zwischen einem Zählpunkt und einer Achszählerauswerteeinheit eines Achszählsystems für ein Schienennetz**
Method and device for monitoring an information transfer between a counting point and an axle counter evaluation unit in an axle counter system for a railway network
Procédé et dispositif pour la supervision d'une transmission des informations entre un point de compte et un compteur d'essieux dans un système de comptage d'essieux pour un réseau ferroviaire

(43) Veröffentlichungstag der Anmeldung: 06.12.2006
(73) Patentinhaber: ALCATEL, 75008 Paris (FR)
(72) Erfinder: Dressler, Ingrid, 71665 Vaihingen/Enz (DE)
(74) Vertreter: Rausch, Gabriele

(56) Entgegenhaltungen:
- EP-A- 0 881 855
- US-A- 5 099 480
- GÜNTER POPPE: "Neue Achszählergeneration Az LM als Nachfolger des bewährten AzL 70-30" SIGNAL + DRAHT, [Online] September 2002 (2002-09), Seiten 41-42, XP002345084 Hamburg Gefunden im Internet: URL:http://www.eurailpress.com/archiv/show pdf.php?datei=/erparchiv/sud2002/09poppe.p df> [gefunden am 2005-09-15]

## Beschreibung

Die Erfindung betrifft ein Verfahren zur Überwachung einer Übertragung von Informationen zwischen einem Zählpunkt und einer Achszählerauswerteeinheit eines Achszählsystems für ein Schienennetz und ein Achszählsystem, eingerichtet zur Durchführung des Verfahrens. Bei dem Verfahren werden die Informationen von einem ISDN-Modem des Zählpunktes über einen ISDN-Kanal einer ISDN-Leitung zu einem ISDN-Modem der Achszählerauswerteeinheit übertragen. Das Verfahren eignet sich insbesondere zur präventiven Diagnose von Kabeldefekten der ISDN-Verbindung zwischen einer Achszählerauswerteeinheit und daran angeschlossenen Zählpunkten zur Verringerung von Verspätungsminuten von Zugverbindungen auf dem Schienennetz.

### Stand der Technik

In der Eisenbahnsignaltechnik werden zur Überwachung von Gleisabschnitten unter anderem elektronische Achszählsysteme (Achszähler) eingesetzt. Derartige Achszählsysteme beinhalten mindestens einen Zählpunkt mit je zwei Schienenkontakten und eine Auswerteeinheit (Achszählauswerteeinheit) für von den Zählpunkten erzeugte Zählimpulse bzw. Daten, die Informationen über derartige Zählimpulse beinhalten (Zählpunkt Telegramme).

Jeder Achszähler überwacht einen ihm zugewiesenen Gleisabschnitt. Detektiert der Achszähler ein vorbeifahrendes Schienenfahrzeug, wird der Gleisabschnitt belegt geschaltet. Detektiert der in Fahrtrichtung des Schienenfahrzeugs nächstgelegene Achszähler das vorbeifahrende Schienenfahrzeug, wird der Gleisabschnitt wieder frei geschaltet.

Beim Vorüberlaufen eines Fahrzeugrades, z.B. eines Zuges, werden nacheinander zwei benachbarte Schienenkontakte betätigt. Dabei werden zwei sich zeitlich überlappende Signale ausgelöst. Diese Signale werden hinsichtlich ihrer Amplitude bewertet und in Zählimpulse umgesetzt, wobei die durch die Fahrtrichtung der vorüberlaufenden Fahrzeugachsen gegebene Folge der Impulse die jeweilige Zählrichtung der Impulse bestimmt.

Elektronische Schienenkontakte bestehen häufig aus zwei an einer Fahrschiene angebrachten, räumlich hintereinander liegenden Sendespulen, die mit Wechselströmen gespeist werden und zwei auf der jeweils gegenüberliegenden Schienenseite angeordneten, mit den Sendespulen induktiv gekoppelten Empfangsspulen. Je eine Sende- und eine Empfangsspule bilden gemeinsam einen Impulsgeber. Die in den Empfangsspulen induzierten Spannungen werden bereits im Zählpunkt ausgewertet. Als Indiz für das Vorüberlaufen eines Fahrzeugrades an einem Schienenkontakt wird das vorübergehende Abfallen und die Phasendrehung der in den Empfangsspulen induzierten Spannungen gewertet. Das Abfallen und die Phasendrehung der Empfangsspannungen ist bedingt durch die Kopplung zwischen den Sende- und Empfangsspulen beim Passieren eines Fahrzeugrades. Die in den Empfangsspulen induzierten Spannungen werden in digitale Signale umgesetzt, aus denen schließlich fahrtrichtungsabhängige Zählimpulse abgeleitet werden.

Für die korrekte Funktion der ISDN-Datenschnittstelle im Achszähler kommt es auf eine gleichbleibend hohe Qualität der Kabelverbindung zwischen Achszählerauswerteeinheit und Zählpunkt an. Eine ISDN-Leitung weist zur Datenübertragung einen B1 und einen B2 ISDN-Kanal auf, wobei insbesondere der derzeit zur Informationsübertragung verwendete B1 ISDN-Kanal der ISDN-Leitung qualitativ nicht beeinträchtigt sein sollte. Dies wird zwar bei der Inbetriebnahme überprüft, kann sich aber während des Betriebes, z.B. durch Eindringen von Wasser, sich lösende Schraubverbindungen etc., verschlechtern. Diese Verschlechterung offenbart sich durch betriebshemmende Störungen, was die Verfügbarkeit des Achszählsystems im Einsatz negativ beeinflusst und z.B. Zugverspätungen verursachen kann.
Eine Diagnose des Zustandes der ISDN-Verbindung, d.h. der ISDN-Leitung und des an der Informationsübertragung beteiligten ISDN-Modems, ist lediglich durch Tests, die eine Betriebsunterbrechung des Achszählsystems voraussetzen, möglich.

Der Artikel "Neue Achszählergeneration Az LM als Nachfolger des bewährten AzL 70-30" von SIGNAL + DRAHT (94) 9/2002 beschreibt ein solches Achszählsysten mit einer ISDN-Leitung.

### Aufgabe der Erfindung

Aufgabe der Erfindung ist es, ein Verfahren und eine Vorrichtung zur Überwachung einer Informationsübertragung zwischen einem Zählpunkt und einer Achszählerauswerteeinheit eines Achszählsystems für ein Schienennetz

bereitzustellen, die die Nachteile des Standes der Technik vermeiden, insbesondere, die eine Diagnosemöglichkeiten für die Erkennung von Verschlechterungen der ISDN-Verbindung ermöglichen, so dass eine Instandsetzung der ISDN Verbindung, d.h. z.B. der zugehörigen Kabelanlage, in nicht Betriebshemmenderweise erfolgen kann.

### Gegenstand der Erfindung

Gelöst wird diese Aufgabe hinsichtlich des Verfahrens dadurch, dass eine Überwachungsbitfolge vom ISDN-Modem des Zählpunktes über einen weiteren ISDN-Kanal der ISDN-Leitung zum ISDN-Modem der Achszählerauswerteeinheit übertragen wird und Übertragungsstörungen in der Überwachungsbitfolge von einem Überwachungsmodul, bevorzugt von der Achszählerauswerteeinheit, überwacht werden.
Es wird also nicht der ISDN-Kanal der ISDN-Leitung, über den die Informationen, d.h. die Zählpunkt Telegramme, von dem ISDN-Modem des Zählpunktes über die ISDN-Leitung zu dem ISDN-Modem der Achszählerauswerteeinheit übertragen werden, zur Überwachung der ISDN-Verbindung heran gezogen, sondern ein weiterer im Stand der Technik unbenutzter ISDN-Kanal. Dem erfindungsgemäßen Verfahren liegt die Idee zugrunde, dass Verschlechterungen der ISDN-Verbindung bei beiden ISDN-Kanälen im gleichen Maße oder zumindest korreliert auftreten.
Dadurch kann eine kontinuierliche Überwachung der Informationsübertragung, d.h. insbesondere der ISDN-Verbindung vorgenommen werden, ohne den Betrieb des überwachten Achszählsystems zu unterbrechen.

Die Verfügbarkeit des Achszählsystems im Falle von Kabelproblemen wie z.B.:
- bei schleichender Änderung der elektrischen Kabeleigenschaften durch eindringendes Wasser
   oder
- bei Wackelkontakt, z.B. durch sich lockernde Schraubklemmen oder stärker werdenden Aderbruch
bleibt im Gegensatz zum Stand der Technik unbeeinträchtigt, da vor Eintritt einer die Verfügbarkeit beeinträchtigenden Störung bereits vom Instandhaltungspersonal reagiert werden kann.

Das erfindungsgemäße Verfahren führt zu einer Verringerung der durch Achszähler-Technik verursachten Verspätungsminuten.

Bevorzugt wird als weiterer ISDN-Kanal der B2 ISDN-Kanal der ISDN-Leitung verwendet. Der im Stand der Technik nicht genutzte B2 Kanal der ISDN-Verbindung zwischen Achszählerauswerteeinheit und Zählpunkt wird genutzt, um durch Verschlechterung der elektrischen Eigenschaften der Kabelanlage bedingt ansteigende Bitfehlerraten zu detektieren, um, bevor es zur Beeinträchtigung der Verfügbarkeit des Achszählsystems kommt, Instandsetzungsmaßnahmen in die Wege leiten zu können. Dadurch kann die durch das erfindungsgemäße Verfahren bereit gestellte zusätzliche Diagnosemöglichkeit ohne Hardware Änderung in bestehenden Zählpunkten und mit geringfügiger Änderung in bestehenden Achszählerauswerteeinheiten realisiert werden.

Vorteilhaft wird als Überwachungsbitfolge ein konstanter Wert übertragen. Dies führt zu einer besonders einfachen Auswertemöglichkeit hinsichtlich von Übertragungsfehlern der Überwachungsbitfolge. Es müssen dazu lediglich Abweichungen vom konstanten Wert festgestellt werden. Bei jeder dieser Abweichungen vom festgelegten konstanten Wert handelt es sich um einen Bitfehler und damit auch um einen Übertragungsfehler.

Die Überwachungsbitfolge kann vorteilhaft von einem Auswertemodul auf einen Anstieg einer Anzahl von Bitfehlern pro Zeiteinheit der zum ISDN-Modem der Achszählerauswerteeinheit übertragenen Überwachungsbitfolge, und/oder auf einen Anstieg von Zeitabschnitten, in denen mehrere Bitfehler aufeinander folgen überwacht wird. Die Auswertung des Anstiegs kann bei der Überwachung mit bekannten statistischen Methoden durchgeführt werden. Ein Anstieg der Anzahl von Bitfehlern und/oder von den genannten Zeitabschnitten gibt einen zuverlässigen Hinweis auf eine zunehmende Verschlechterung der ISDN-Verbindung.

Bevorzugt übermittelt das Auswertemodul in der Achszählerauswerteeinheit dabei bei Überschreiten eines Bitfehlerschwellwertes und/oder einer Fehlermaximalzeit eine Diagnosemeldung an eine Diagnoseschnittstelle der Achszählerauswerteeinheit. Die Diagnoseschnittstelle kann von einem übergeordneten System ausgelesen werden. Ein vorhandenes Diagnosesystem z.B. im Achszählsystem des bekannten Typs Az LM kann eine Diagnosemeldung zusätzlich an das übergeordnete System, d.h. z.B. ein Stellwerk, weiterleiten. Konkret muss dazu nur in der ersten Baugruppe des Achszählsystems des Typs Az LM, also im Zählpunktvorrechner, die Hardware modifiziert werden.
Somit ist eine kostengünstige Nachrüstung in bestehenden Anlagen möglich. Das Produkt Ries der Anmelderin kann z.B. diese Diagnosemeldung auswerten.

Ein erfindungsgemäßes Achszählsystem weist mindestens einen Zählpunkt mit einem ISDN-Modem und eine Achszählerauswerteeinheit mit einem ISDN-Modem auf. Das ISDN-Modem des Zählpunktes ist eingerichtet, Informationen, d.h. Daten die Informationen über derartige Zählimpulse beinhalten, über einen ISDN-Kanal einer ISDN-Leitung zu dem ISDN-Modem der Achszählerauswerteeinheit zu senden. Erfindungsgemäß ist der Zählpunkt eingerichtet, eine Überwachungsbitfolge vom ISDN-Modem des Zählpunktes über einen weiteren ISDN-Kanal, bevorzugt den B2 ISDN-Kanal, der ISDN-Leitung zum ISDN-Modem der Achszählerauswerteeinheit zu senden. Ein Überwachungsmodul ist bevorzugt in der Achszählerauswerteeinheit vorgesehen, eingerichtet Übertragungsstörungen in der Überwachungsbitfolge zu überwachen. Das erfindungsgemäße Achszählsystem ist zur Durchführung des erfindungsgemäßen Verfahrens eingerichtet, wodurch die Vorteile des erfindungsgemäßen Verfahrens bereit gestellt werden.

Vorteilhaft ist mindestens ein Zählpunkt eines erfindungsgemäßen Achszählsystems eingerichtet, als Überwachungsbitfolge einen konstanten Wert zu dem ISDN-Modem der Achszählerauswerteeinheit zu senden, wodurch auf eine Weise Bitfehler der übertragenen Überwachungsbitfolge durch Abweichungen von dem konstanten Wert festgestellt werden können.

Bevorzugt ist ein Auswertemodul vorgesehen, eingerichtet, die Überwachungsbitfolge auf einen Anstieg einer Anzahl von Bitfehlern pro Zeiteinheit der zum ISDN-Modem der Achszählerauswerteeinheit übertragenen Überwachungsbitfolge, und/oder auf einen Anstieg der Dauer von Zeitabschnitten, in denen mehrere Bitfehler aufeinander folgen, bevorzugt statistisch, zu überwachen. Das Auswertemodul kann dadurch zuverlässig Verschlechterungen der ISDN-Verbindung diagnostizieren.

Wenn eine Diagnoseschnittstelle an der Achszählerauswerteeinheit vorgesehen ist und das Auswertemodul in der Achszählerauswerteeinheit angeordnet ist, wobei das Auswertemodul eingerichtet ist, bei Überschreiten eines Bitfehlerschwellwertes und/oder einer Fehlermaximalzeit eine Diagnosemeldung an die Diagnoseschnittstelle zu übermitteln, kann eine Diagnosemeldung von einem übergeordneten System, z.B. in einem Stellwerk, ausgelesen werden. Eine Fernüberwachung wird dadurch möglich.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel der erfindungsgemäßen Vorrichtung ist in der schematischen Zeichnung dargestellt und wird in der nachfolgenden Beschreibung erläutert.

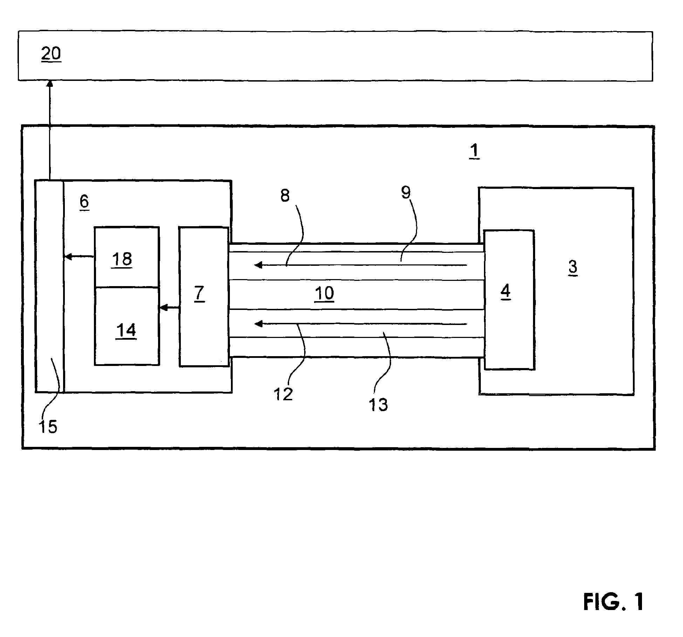

- **Fig. 1**: zeigt ein Blockschaltbild eines erfindungsgemäßen Achszählsystems.

In **Fig. 1** ist stark schematisiert in einem Blockschaltbild ein erfindungsgemäßes Achszählsystem 1 dargestellt. Das erfindungsgemäße Achszählsystem 1 weist einen Zählpunkt 3 mit einem ISDN-Modem 4 und eine Achszählerauswerteeinheit 6 mit einem ISDN-Modem 7 auf. Bei dem Zählpunkt 3 kann es sich z. B. um einen Zählpunkt des Typs Zp30H oder ZP30CA-2 handeln. Das ISDN-Modem 4 des Zählpunktes 3 ist eingerichtet, Zählpunkt Telegramme 8, also Daten, die Informationen über Zählimpulse beinhalten bzw. darstellen, über den B1 ISDN-Kanal 9 einer ISDN-Leitung 10 zu dem ISDN-Modem 7 der Achszählerauswerteeinheit 6 zu senden. Letzteres ist in der Figur durch einen Pfeil symbolisiert. Der Zählpunkt 3 sendet eine Überwachungsbitfolge 12 vom ISDN-Modem 4 des Zählpunktes 3 über den B2 ISDN-Kanal 13 der ISDN-Leitung 10 zum ISDN-Modem 7 der Achszählerauswerteeinheit 6. Das Senden der Überwachungsbitfolge ist in der Figur durch einen weiteren Pfeil symbolisiert. Als Überwachungsbitfolge 12 wird dabei ein konstanter Wert zur Überwachung z.B. der Kabelqualität der ISDN-Leitung 10 vom Zählpunkt 3 zur Achszählerauswerteeinheit 6 übermittelt. Das Kabel der ISDN-Leitung 10 weist dazu zwei Adern auf, also eine Ader pro ISDN-Kanal. In der Achszählerauswerteeinheit 6 ist ein Überwachungsmodul 14 vorgesehen, das Übertragungsstörungen in der Überwachungsbitfolge 12 überwacht. Dazu werden Abweichungen der übertragenen Überwachungsbitfolge von der gesendeten Überwachungsbitfolge, also vom konstanten Wert, überwacht. An der Achszählerauswerteeinheit 6 ist eine Diagnoseschnittstelle 15 vorgesehen, wobei ein Auswertemodul 18 in der Achszählerauswerteeinheit 6 eingerichtet ist, bei Überschreiten eines Bitfehlerschwellwertes und/oder einer Fehlermaximalzeit eine Diagnosemeldung an die Diagnoseschnittstelle 15 zu übermitteln. Über diese Diagnoseschnittstelle 15 kann eine Meldung an ein übergeordnetes System 20 übergeben werden, bzw. das übergeordnete System 20 kann die Meldung übernehmen, dass der Bitfehlerschwellwert und/oder die Fehlermaximalzeit überschritten ist, d.h. dass die Bitfehlerrate der Übertragungsbitfolge 12 zu hoch ist, woraufhin Wartungsmaßnahmen ergriffen werden können.
Diese präventive Diagnose nutzt also bereits im Stand der Technik vorhandene zwei Adern der ISDN-Verbindung zwischen Zählpunkt und Achszählerauswerteeinheit, dort wird von der ISDN Übertragung nur der B1 Kanal zur Telegrammübertragung genutzt. Der ISDN B2 Kanal auf diesen beiden Adern steht im Stand der Technik zwar zur Verfügung ist aber ungenutzt. Das erfindungsgemäße Verfahren beruht darauf, dass davon ausgegangen werden kann, dass Telegrammfehler im für die Telegramme genutzten B1 ISDN-Kanal sich gleichermaßen im B2 ISDN-Kanal auswirken. Überträgt man nun vom Zählpunkt 3 aus über den B2 ISDN-Kanal laufend einen konstanten Wert, d.h. "logisch high" oder "logisch low", kann man in der Achszählerauswerteeinheit 6, z.B. vom Typ Az LM, diese Übertragung überwachen und Abweichungen vom konstanten Wert feststellen. Bei jeder dieser Abweichungen vom festgelegten konstanten Wert handelt es sich um einen Bitfehler. Da Achszählerauswerteeinheiten 6, insbesondere das System Az LM, hinsichtlich der Informationsübertragung robust ausgelegt sind, also die dazu nötige Datenübertragung ausreichend Redundanzen aufweist, können einige Bitfehler toleriert werden, ohne dass eine die Systemverfügbarkeit beeinträchtigende Störung auftritt. Deshalb ist es vorteilhaft, diese Bitfehler in einer Software der Achszählerauswerteeinheit 6, bzw. im Auswertemodul 18; statistisch auf Anstieg der Anzahl der Bitfehler pro Zeiteinheit und auf Dauer von Übertragungsstörungen zu überwachen. Eine Diagnosemeldung wird dann beim Überschreiten einer für die Verfügbarkeit kritischen Schwelle generiert. Diese Diagnosemeldung wird dann dahingehend weitergeleitet und ausgewertet, dass eine zuständige Instandhaltungsabteilung des Schienennetzbetreibers Korrekturmaßnahmen ergreifen kann, ohne dass der Zugverkehr beeinträchtigt wird, z.B. ohne dass es zu Verspätungen im Bahnverkehr kommt.

Vorgeschlagen wird ein Verfahren zur Überwachung einer Übertragung von Informationen zwischen einem Zählpunkt 3 und einer Achszählerauswerteeinheit 6 eines Achszählsystems 1 für ein Schienennetz sowie ein Achszählsystem zur Durchführung des Verfahrens. Bei dem Verfahren werden die Informationen von einem ISDN-Modem 4 des Zählpunktes 3 über einen ISDN-Kanal 9 einer ISDN-Leitung 10 zu einem ISDN-Modem 7 der Achszählerauswerteeinheit 6 übertragen. Eine Überwachungsbitfolge 12 wird vom ISDN-Modem 4 des Zählpunktes 3 über einen weiteren ISDN-Kanal 13 der ISDN-Leitung 10 zum ISDN-Modem 7 der Achszählerauswerteeinheit 6 übertragen und Übertragungsstörungen werden in der Überwachungsbitfolge 12 von einem Überwachungsmodul 14, bevorzugt von der Achszählerauswerteeinheit 6, überwacht.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Verfahren zur Überwachung einer Übertragung von Informationen zwischen einem Zählpunkt (3) und einer Achszählerauswerteeinheit (6) eines Achszählsystems (1) für ein Schienennetz, wobei die Informationen von einem ISDN-Modem (4) des Zählpunktes (3) über einen ISDN-Kanal (9) einer ISDN-Leitung (10) zu einem ISDN-Modem (7) der Achszählerauswerteeinheit (6) übertragen werden,
**dadurch gekennzeichnet, dass**
eine Überwachungsbitfolge (12) vom ISDN-Modem (4) des Zählpunktes (3) über einen weiteren ISDN-Kanal (13) der ISDN-Leitung (10) zum ISDN-Modem (7) der Achszählerauswerteeinheit (6) übertragen wird und Übertragungsstörungen in der Überwachungsbitfolge (12) von einem Überwachungsmodul (14) überwacht werden.

2. Verfahren nach Anspruch 1,
**dadurch gekennzeichnet, dass**
als weiterer ISDN-Kanal (13) der B2 ISDN-Kanal verwendet wird.

3. Verfahren nach mindestens einem der Ansprüche 1 bis 2,
**dadurch gekennzeichnet, dass**
als Überwachungsbitfolge (12) ein konstanter Wert übertragen wird.

4. Verfahren nach mindestens einem der Ansprüche 1 bis 3,
**dadurch gekennzeichnet, dass**
von einem Auswertemodul (18) die Überwachungsbitfolge (12) auf einen Anstieg einer Anzahl von Bitfehlern pro Zeiteinheit der zum ISDN-Modem (7) der Achszählerauswerteeinheit (6) übertragenen Überwachungsbitfolge (12), und/oder auf einen Anstieg von Zeitabschnitten in der mehrere Bitfehler aufeinander folgen überwacht wird.

5. Verfahren nach Anspruch 4,
**dadurch gekennzeichnet, dass**
das Auswertemodul (18) in der Achszählerauswerteeinheit (6) bei Überschreiten eines Bitfehlerschwellwertes und/oder einer Fehlermaximalzeit eine Diagnosemeldung an eine Diagnoseschnittstelle (15) der Achszählerauswerteeinheit (6) übermittelt.

6. Achszählsystem (1), eingerichtet zur Durchführung des Verfahrens zur Überwachung einer Übertragung von Informationen nach mindestens einem der Ansprüche 1 bis 5, mit
mindestens einem Zählpunkt (3) mit einem ISDN-Modem (4) und einer Achszählerauswerteeinheit (6) mit einem ISDN-Modem (7),
wobei das ISDN-Modem (4) des Zählpunktes (3) eingerichtet ist, die Informationen über einen ISDN-Kanal (9) einer ISDN-Leitung (10) zu dem ISDN-Modem (7) der Achszählerauswerteeinheit (6) zu senden,
**dadurch gekennzeichnet, dass**
der Zählpunkt (3) eingerichtet ist, eine Überwachungsbitfolge (12) vom ISDN-Modem (4) des Zählpunktes (3) über einen weiteren ISDN-Kanal (13) der ISDN-Leitung (10) zum ISDN-Modem (7) der Achszählerauswerteeinheit (6) zu senden und ein Überwachungsmodul (14) eingerichtet ist, Übertragungsstörungen in der Überwachungsbitfolge (12) zu überwachen.

7. Achszählsystem nach Anspruch 6,
**dadurch gekennzeichnet, dass**
der Zählpunkt (3) eingerichtet ist, als Überwachungsbitfolge (12) einen konstanten Wert zu dem ISDN-Modem (7) der Achszählerauswerteeinheit (6) zu senden.

8. Achszählsystem nach mindestens einem der Ansprüche 6 bis 7,
**dadurch gekennzeichnet, dass**
ein Auswertemodul (18) vorgesehen ist, eingerichtet, die Überwachungsbitfolge (12) auf einen Anstieg einer Anzahl von Bitfehlern pro Zeiteinheit der zum ISDN-Modem (7) der Achszählerauswerteeinheit (6) übertragenen Überwachungsbitfolge (12), und/oder auf einen Anstieg der Dauer von Zeitabschnitten, in denen mehrere Bitfehler aufeinander folgen, zu überwachen.

9. Achszählsystem nach Anspruch 8,
**dadurch gekennzeichnet, dass**
eine Diagnoseschnittstelle (15) an der Achszählerauswerteeinheit (6) vorgesehen ist und das Auswertemodul (18) in der Achszählerauswerteeinheit (6) angeordnet ist, wobei das Auswertemodul (18) eingerichtet ist, bei Überschreiten eines Bitfehlerschwellwertes und/oder einer Fehlermaximalzeit eine Diagnosemeldung an die Diagnoseschnittstelle (15) zu übermitteln.

## Claims

1. Method of monitoring transmission of information between a counting point (3) and an axle counter evaluation unit (6) of an axle counting system (1) for a rail network, the information being transmitted from an ISDN modem (4) of the counting point (3) via an ISDN channel (9) of an ISDN line (10) to an ISDN modem (7) of the axle counter evaluation unit (6),
**characterized in that**
a monitoring bit sequence (12) is transmitted by the ISDN modem (4) of the counting point (3) via a further ISDN channel (13) of the ISDN line (10) to the ISDN modem (7) of the axle counter evaluation unit (6), and transmission faults in the monitoring bit sequence (12) are monitored by a monitoring module (14).

2. Method according to Claim 1,
**characterized in that**
as the further ISDN channel (13), the B2 ISDN channel is used.

3. Method according to at least one of Claims 1 or 2,
**characterized in that**
as the monitoring bit sequence (12), a constant value is transmitted.

4. Method according to at least one of Claims 1 to 3,
**characterized in that**
the monitoring bit sequence (12) is monitored by an evaluation module (18) for an increase of a number of bit errors per time unit of the monitoring bit sequence (12) which is transmitted to the ISDN modem (7) of the axle counter evaluation unit (6), and/or for an increase of time segments in which multiple bit errors follow each other.

5. Method according to Claim 4,
**characterized in that**
the evaluation module (18) in the axle counter evaluation unit (6) transmits a diagnostic message to a diagnostic interface (15) of the axle counter evaluation unit (6) when a bit error threshold value and/or a maximum error time is exceeded.

6. Axle counting system (1), which is set up to carry out the method of monitoring transmission of information according to at least one of Claims 1 to 5, with
at least one counting point (3) with an ISDN modem (4) and one axle counter evaluation unit (6) with an ISDN modem (7), the ISDN modem (4) of the counting point (3) being set up to transmit the information via an ISDN channel (9) of an ISDN line (10) to the ISDN modem (7) of the axle counter evaluation unit (6),
**characterized in that**
the counting point (3) is set up to transmit a monitoring bit sequence (12) from the ISDN modem (4) of the counting point (3), via a further ISDN channel (13) of the ISDN line (10) to the ISDN modem (7) of the axle counter evaluation unit (6), and that a monitoring module (14) is set up to monitor transmission faults in the monitoring bit sequence (12).

7. Axle counting system according to Claim 6,
**characterized in that**
the counting point (3) is set up to transmit a constant value to the ISDN modem (7) of the axle counter evaluation unit (6) as the monitoring bit sequence (12).

8. Axle counting system according to at least one of Claims 6 to 7,
**characterized in that**
an evaluation module (18) is provided, and is set up to monitor the monitoring bit sequence (12) for an increase of a number of bit errors per time unit of the monitoring bit sequence (12) which is transmitted to the ISDN modem (7) of the axle counter evaluation unit (6), and/or for an increase of the duration of time segments in which multiple bit errors follow each other.

9. Axle counting system according to Claim 8,
**characterized in that**
a diagnostic interface (15) is provided on the axle counter evaluation unit (6), and the evaluation module (18) is arranged in the axle counter evaluation unit (6), the evaluation module (18) being set up to transmit a diagnostic message to a diagnostic interface (15) when a bit error threshold value and/or a maximum error time is exceeded.

## Revendications

1. Procédé pour le contrôle d'une transmission d'informations entre un point de comptage (3) et une unité d'analyse du compteur d'essieux (6) d'un système de comptage d'essieux (1) pour un réseau ferroviaire, les informations étant transmises d'un modem ISDN (4) du point de comptage (3) par un canal ISDN (9) d'une ligne ISDN (10) à un modem ISDN (7) de l'unité d'analyse du compteur d'essieux,
**caractérisé en ce que**
une succession de bits de contrôle (12) est transmise du modem ISDN (4) du point de comptage (3) par un autre canal ISDN (13) de la ligne ISDN (10) au modem ISDN (7) de l'unité d'analyse du compteur d'essieux (6) et des perturbations de transmission dans la succession de bits de contrôle (12) sont contrôlées par un module de contrôle (14).

2. Procédé selon la revendication 1,
**caractérisé en ce que**
le canallSDN B2 est utilisé comme autre canal ISDN (13),

3. Procédé selon au moins l'une quelconque des revendications 1 à 2,
**caractérisé en ce que**
une valeur constante est transmise comme succession de bits de contrôle (12).

4. Procédé selon au moins l'une des revendications 1 à 3,
**caractérisé en ce que**
un module d'analyse (18) contrôle la succession de bits de contrôle (12) au niveau d'une augmentation d'un certain nombre d'erreurs binaires par unité de temps de la succession de bits de contrôle (12) transmise au modem ISDN (7) de l'unité d'analyse du compteur d'essieux (6) et/ou au niveau d'une augmentation de périodes au cours desquelles plusieurs erreurs binaires se succèdent.

5. Procédé selon la revendication 4,
**caractérisé en ce que**
le module d'analyse (18) dans l'unité d'analyse du compteur d'essieux (6) transmet un message de diagnostic à une interface de diagnostic (15) de l'unité d'analyse du compteur d'essieux (6) en cas de dépassement d'une valeur seuil d'erreur binaire et/ou d'un temps maximum d'erreur.

6. Système de comptage d'essieux (1), aménagé pour la mise en oeuvre du procédé pour le contrôle d'une transmission d'informations selon au moins l'une quelconque des revendications 1 à 5, comprenant au moins un point de comptage (3) avec un modem ISDN (4) et une unité d'analyse du compteur d'essieux (6) avec un modem ISDN (7), le modem ISDN (4) du point de comptage (3) étant aménagé pour envoyer les informations par un canal ISDN (9) d'une ligne ISDN (10) au modem ISDN (7) de l'unité d'analyse du compteur d'essieux (6),
**caractérisé en ce que**
le point de comptage (3) est aménagé pour envoyer une succession de bits de contrôle (12) du modem ISDN (4) du point de comptage (3) par un autre canal ISDN (13) de la ligne ISDN (10) au modem ISDN (7) de l'unité d'analyse du compteur d'essieux (6) et un module de contrôle (14) est aménagé pour surveiller les perturbations de transmission dans la succession de bits de contrôle (12).

7. Système de comptage d'essieux selon la revendication 6,
**caractérisé en ce que**
le point de comptage (3) est aménagé pour envoyer comme succession de bits de contrôle (12) une valeur constante au modem ISDN (7) de l'unité d'analyse du compteur d'essieux (6).

8. Système de comptage d'essieux selon au moins l'une quelconque des revendications 6 à 7,
**caractérisé en ce que**
il est prévu qu'un module d'analyse (18), aménagé pour contrôler la succession de bits de contrôle (12) au niveau d'une augmentation d'un certain nombre d'erreurs binaires par unité de temps de la succession de bits de contrôle (12) transmise au modem ISDN (7) de l'unité d'analyse du compteur d'essieux (6) et/ou au niveau d'une augmentation de la durée de périodes pendant lesquelles plusieurs erreurs binaires apparaissent successivement.

9. Système de comptage d'essieux selon la revendication 8,
**caractérisé en ce que**
une interface de diagnostic (15) est attribuée sur l'unité d'analyse du compteur d'essieux (6) et le module d'analyse (18) est disposé dans l'unité d'analyse du compteur d'essieux (6), le module d'analyse (18) étant aménagé pour transmettre un message de diagnostic à l'interface de diagnostic (15) en cas de dépassement d'une valeur seuil d'erreurs binaires et/ou d'un temps maximum d'erreur.
